# EUROPEAN PATENT SPECIFICATION

(11) **EP 1 852 297 B1**
(45) Date of publication and mention of the grant of the patent: **07.01.2009**
(21) Application number: 06075975.0
(22) Date of filing: 01.05.2006
(51) Int. Cl.: B60K 15/035, B60K 15/04

(54) **Fuel filler assembly for a motor vehicle**
Kraftstoff-Einfüllstutzen für ein Kraftfahrzeug
Goulotte de remplissage d'essence pour véhicule automobile

(43) Date of publication of application: 07.11.2007
(73) Proprietor: Ford Global Technologies, LLC, Dearborn, MI 48126 (US); Ford Otomotiv Sanayi Anonim Sirketi, Uskudar Istanbul (TR)
(72) Inventor: Kilic, Nami, Yahyakaptan, Kocaeli (TR); Yegenoglu, Bulent, 40310 Kocaeli (TR); Cetin, Emre, Degirmendere-Golcuk 41670 Kocaeli (TR)
(74) Representative: Grunfeld, David Peter

(56) References cited:
- EP-A2- 0 026 727
- US-A- 4 122 968
- US-A- 4 714 172
- US-A- 4 809 863

## Description

This invention relates to motor vehicles and in particular to a fuel filler assembly for a motor vehicle used to replenish the motor vehicle with liquid fuel.

It is well known from, for example, US paten publication 2005/0224135 to provide a motor vehicle with a fuel refuelling system in which a fuel filler pipe is provided to permit the refilling of a fuel tank of the motor vehicle and a separate vent pipe is provided to allow air/vapour to escape from the fuel tank during the refuelling. Such a vent pipe is required in order to prevent air/vapour from becoming trapped in the fuel tank thereby reducing the volume of the fuel tank.

It is further known from US Patent 5,996,622 to provide a fuel filler pipe and vent pipe as a single component manufactured from plastic. The vent pipe is so constructed as to form an expansion tank for the vapour that increases filling performance thereby eliminating the need for a separate expansion tank.

It is a problem with both of these prior art arrangements that if the motor vehicle is involved in a collision the fuel filler pipe may be ruptured thereby risking the leakage of fuel from the fuel tank. It is a further problem with the design proposed in US patent 5,996,622 that the fuel filler assembly is relatively bulky and therefore difficult to fit in the limited space available on a motor vehicle and is more prone to damage if the vehicle is hit from behind in a crash.

US patent 4,809,863 discloses a fuel filler system in which the fuel fill pipe is housed within a vapour flow passage.

It is an object of this invention to provide a fuel filler assembly for a motor vehicle that is economical to manufacture, provides improved resistance to fuel leakage in the event of an accident, provides improved refuelling performance and is relatively compact.

According to a first aspect of the invention there is provided a fuel filler assembly for a motor vehicle comprising a fuel filler conduit, having an inlet end into which fuel can be admitted from a fuel dispensing apparatus and an outlet end for connection to a reservoir used for storing fuel, and a vent conduit within which is housed the fuel filler conduit, the vent conduit having a first end for connection to an upper region of the fuel reservoir and a second end through which, at least during refilling of the fuel reservoir, vapour can escape from the fuel reservoir, wherein the external diameter of the fuel filler conduit is substantially constant along its length, and the vent conduit has a first portion of uniform internal diameter extending away from its first end that is only slightly larger than the corresponding external diameter of the fuel filler conduit so that only a small gap is defined therebetween and a second portion of gradually increasing internal diameter extending away from the first portion towards the second end so that, for at least a portion of its length, the vent conduit has an internal diameter that is considerably larger than the corresponding external diameter of the fuel filler conduit and a large gap defining a vapour expansion volume is formed therebetween.

Preferably, the filler and vent conduits may be made from plastic.

The inlet end of the fuel filler conduit may be connected to a fuel filler adaptor having an internal diameter sized for co-operation with a nozzle of the fuel dispensing apparatus.

The fuel filler adaptor may be fitted in an outer housing attached to the second end of the vent conduit, the outer housing cooperating with the fuel filler adaptor so as to define one or more vents through which vapour from the vent conduit can flow.

According to a second aspect of the invention there is provided a motor vehicle having a fuel filler assembly in accordance with said first aspect of the invention.

The invention will now be described by way of example with reference to the accompanying drawing of which:-
Fig.1 is a pictorial exploded diagram showing the major components of a fuel filler assembly according to the invention;
Fig.2 is a side view showing the assembled fuel filler assembly of Fig.1;
Fig.3a is a cross-section on the line X-X on Fig.2;
Fig. 3b is a cross-section on the line Y-Y on Fig.2;
Fig. 4a is a cross section along the line Z-Z on Fig.1; and
Fig.4b is a cross-section along the line W-W on Fig.1 through an inlet end of the fuel filler assembly.

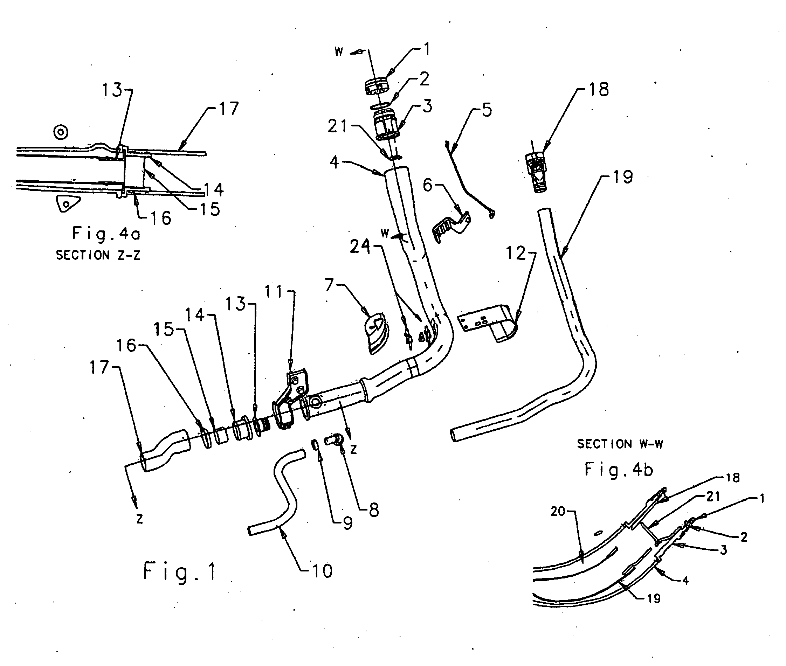

With reference to Figs.1 to 4b there is shown a fuel filler assembly 100 for fitment to a motor vehicle (not shown) .

The fuel filler assembly 100 comprises of a fuel filler conduit in the form of a plastic extruded filler pipe 19 located within a blow moulded plastic vent conduit 4.

The filler pipe 19 has an inlet end to which is connected a filler adaptor 18 having an internal diameter sized to accommodate a nozzle (not shown) of a fuel dispensing apparatus such as a fuel pump (not shown). At the opposite end to the inlet end, (see Fig.4a) the filler pipe 19 has an outlet end which is attached to a flexible pipe 17 by means of two connector pieces 13, 14. The first connector piece 13 is inserted into the outlet end of the filler pipe 19 and the second connector piece 14 is inserted in one end of the flexible pipe 17. A hose clamp 16 is used to hold the flexible pipe 17 onto the second connector piece 14. An anti-spit back valve 15 is fitted in the second connector piece 14. The flexible pipe 17 is connected at its other end to a fuel reservoir in the form of a fuel tank 25 mounted near to a rear end of the motor vehicle. The filler pipe 19 as shown is of a constant external diameter along its length. The filler pipe 19 may also be of a corrugated form.

The vent conduit 4 has a first end connected to the first connector piece 13, the first connector piece being inserted into a bore in the first end of the vent conduit 4. A connector elbow 8 is fitted to the vent conduit 4 near to its first end to connect the vent conduit 4 to a flexible vent pipe 10. The flexible vent pipe 10 is held onto the elbow 8 by a pipe clamp/clip 9. The flexible pipe 10 is connected at an opposite end to an upper portion of the fuel tank 25 so as to permit vapour to escape from the fuel tank 25 during refilling.

The vent conduit 4 is slidingly supported by a lower bracket 11 fastened to part of the structure of the motor vehicle to which the fuel filler assembly 100 is fitted. The vent conduit 4 can move relative to the body structure of the motor vehicle due to the clearance fit of the vent conduit 4 in the bracket 11.

A central bracket assembly comprising of a support member 7 and a bracket 12 is used to secure the vent conduit 4 to the body structure at the end of a first portion which extends along a substantially horizontal path from the first end of the vent conduit 4 to an intermediate position where the vent conduit 4 is bent upwardly so as to follow a more vertical path for a second portion of its length. The bracket 12 is fastened to part of the body structure of the motor vehicle by a number of rivets 24 and the support member 7 is connected to the bracket 12 by a break away fixing.

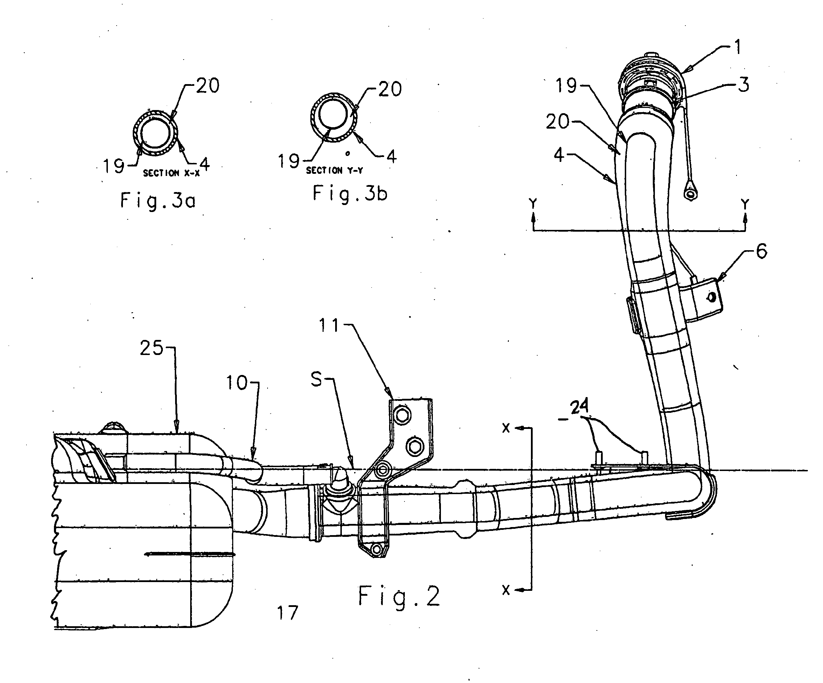

The first portion of the vent conduit 4 has a uniform internal diameter and extends away from the first end of the vent conduit 4 to the intermediate position. The internal diameter of the vent conduit 4 in the first portion is only slightly larger than the corresponding external diameter of the fuel filler conduit 19 so that, as can be seen on Fig.3a, only a small gap 20 is defined therebetween. As the first portion of the vent conduit 4 is below a siphon level indicated by the dotted line "S" on Fig.2 it is important to minimise the volume between the vent conduit 4 and the fuel filler pipe 19 as this 'siphoning volume' will reduce the performance of the fuel filler assembly 100 during refilling of the fuel tank 25 due to the fact that any fuel that gathers there must be displaced by any vapour escaping from the fuel tank 25. In practice it is desirable to have an expansion volume that is considerably larger than the 'siphoning volume' and so by minimising the 'siphoning volume' it is possible to minimise the size of expansion volume required and hence the size of the vent conduit 4. It will be appreciated that it is desirable for the fuel filler run from the fuel tank 25 to be continuously upwardly so that no 'siphoning volume' is present but packaging restraints often mean that this is not possible. If there is no 'siphoning volume' then it is not necessary to have an expansion volume but it is still necessary to have a vent conduit to ensure that the fuel tank can be filled efficiently.

The second portion of the vent conduit 4 has a gradually increasing internal diameter as it extends away from the intermediate position towards the second end of the vent conduit 4 and is secured to the body structure of the motor vehicle by an upper bracket 6.

Therefore for at least the second portion of its length the vent conduit 4 has an internal diameter that is considerably larger than a corresponding external diameter of the fuel filler conduit 19 so that near to the second end a large gap 20 is formed therebetween, as shown on Fig.3b. The large gap between the fuel filler pipe 19 and the vent conduit 4 forms a large integral expansion volume that prevents premature shut-off of the fuel dispensing apparatus during filling of the fuel tank 25.

With particular reference to Fig.4b, an outer plastic housing 3 is secured to the second end of the vent conduit 4 by welding and cooperates with the fuel filler adaptor 18 so as to define one or more vents (not shown) through which vapour from the vent conduit 4 can flow during filling of the fuel tank 25. Those skilled in the art will appreciate that the vapour from the fuel tank 25 is recovered in some way and is not released directly into the atmosphere. An "O" ring 2 is interposed between the fuel filler adapter 18 and the outer housing 3 to prevent fuel from entering the second end of the vent conduit 4 during filling of the fuel tank 25. An earthing device in the form of a metal insert 1 is located at the entrance to the outer housing 3 for cooperation with a nozzle of the fuel dispensing apparatus so as to prevent the build up of static electricity during filling of the fuel tank 25. The metal insert 1 is connected to an electrically conductive flap 21 which is designed to be the first contact with the nozzle of the fuel dispensing apparatus. The metal insert 1 is connected to the body structure of the motor vehicle by means of an earthing lead 5 which is connected between the metal insert 1 and the upper bracket 6.

The upper bracket 6 is secured to the body structure of the motor vehicle and is used to secure the upper or inlet end of the fuel filler assembly 100 to the motor vehicle.

In use, when fuel enters the fuel tank 25 during filling of the fuel tank 25 any vapour in the upper portion of the fuel tank will be expelled from the fuel tank 25 by the incoming fuel. This expelled vapour will tend to displace any fuel sitting in the siphoning volume towards the second end of the vent conduit 4. However, because the expansion volume between the vent conduit 4 and the filler pipe 19 in the second portion of the vent conduit 4 is much larger than the volume of the siphoning volume, the vapour is able to push past the fuel without any fuel being transferred into the outer housing 3.

Advantages of the invention include low cost of manufacture due to the fact that an extruded corrugated filler pipe is introduced into blow moulded vent conduit, the fuel filler assembly is compact, easy to package on the motor vehicle and does not require a separate expansion chamber and safety of the fuel filler assembly is improved because the fuel filler pipe is protected by the surrounding vent conduit and so is difficult to rupture it and the vent conduit prevents the fuel filler pipe from being pierced by sharp edges of the vehicle body that would normally come into contact with the fuel filler pipe during a rear crash. In addition, even if the fuel filler pipe is ruptured fuel can not escape unless the vent conduit has also been ruptured.

A further advantage of the invention is that the vent conduit is substantially circular in cross-section and so is less likely to be damaged in a crash than an irregular shaped component or a separate filler pipe and vent conduit.

Furthermore, the relatively small size of a fuel filler assembly made in accordance with the invention is easier to package on a vehicle in a manner that minimises the risk of damage to the assembly in a crash.

Although the invention in the preferred embodiment disclosed above is made from two plastic conduits located one inside the other it will be appreciated that the fuel filler pipe could be made from a different material or a combination of materials. For example, the fuel filler pipe could be made from metal and the vent conduit from plastic.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as defined by the appended claims.

## Claims

1. A fuel filler assembly for a motor vehicle comprising a fuel filler conduit (19) having an inlet end into which fuel can be admitted from a fuel dispensing apparatus and an outlet end for connection to a reservoir (25) used for storing fuel and a vent conduit (4) within which is housed the fuel filler conduit (19), the vent conduit (4) having a first end for connection to an upper region of the fuel reservoir (25) and a second end through which, at least during refilling of the fuel reservoir (25), vapour can escape from the fuel reservoir (25), **characterised in that** the external diameter of the fuel filler conduit (19) is substantially constant along its length and the vent conduit (4) has a first portion of uniform internal diameter extending away from its first end that is only slightly larger than the corresponding external diameter of the fuel filler conduit (19) so that only a small gap is defined therebetween and a second portion of gradually increasing internal diameter extending away from the first portion towards the second end so that, for at least a portion of its length, the vent conduit (4) has an internal diameter that is considerably larger than the corresponding external diameter of the fuel filler conduit (19) and a large gap (20) defining a vapour expansion volume is formed therebetween.

2. An assembly as claimed in claim 1, wherein the filler and vent conduits (19, 4) are both made from plastic.

3. An assembly as claimed in claim 1 or 2, wherein the inlet end of the fuel filler conduit (19) is connected to a fuel filler adaptor (18) having an internal diameter sized for co-operation with a nozzle of the fuel dispensing apparatus.

4. An assembly as claimed in claim 3, wherein the fuel filler adaptor (18) is fitted in an outer housing (3) attached to the second end of the vent conduit (4), the outer housing (3) cooperating with the fuel filler adaptor (18) so as to define one or more vents through which vapour from the vent conduit can flow.

5. A motor vehicle having a fuel filler assembly as claimed in any of claims 1 to 4.

## Patentansprüche

1. Kraftstoff-Einfüllstutzenanordnung für ein Kraftfahrzeug mit einer Einfüllstutzenleitung (19), die ein Einlassende, in das Kraftstoff von einer Kraftstoffabgabevorrichtung eingelassen werden kann, und ein Auslassende zur Verbindung mit einem Behälter (25), der zur Lagerung von Kraftstoff verwendet wird, aufweist, und einer Entlüftungsleitung (4), in der die Einfüllstutzenleitung (19) untergebracht ist, wobei die Entlüftungsleitung (4) ein erstes Ende zur Verbindung mit einem oberen Bereich des Kraftstoffbehälters (25) und ein zweites Ende, durch das, zumindest während des Auffüllens des Kraftstoffbehälters (25), Dampf aus dem Kraftstoffbehälter (25) entweichen kann, aufweist, **dadurch gekennzeichnet, dass** der Außendurchmesser der Einfüllstutzenleitung (19) entlang seiner Länge im Wesentlichen konstant ist und die Entlüftungsleitung (4) einen sich von ihrem ersten Ende weg erstreckenden ersten Teil mit gleichförmigem Innendurchmesser, der nur etwas größer ist als der entsprechende Außendurchmesser der Einfüllstutzenleitung (19), so dass dazwischen nur ein kleiner Spalt definiert wird, und einen zweiten Teil mit allmählich größer werdendem Innendurchmesser, der sich von dem ersten Teil zum zweiten Ende erstreckt, aufweist, so dass, zumindest über einen Teil ihrer Länge, die Entlüftungsleitung (4) einen Innendurchmesser aufweist, der wesentlich größer ist als der entsprechende Außendurchmesser der Einfüllstutzenleitung (19), und dazwischen ein großer Spalt (20) gebildet wird, der ein Dampfexpansionsvolumen definiert.

2. Anordnung nach Anspruch 1, wobei die Einfüllstutzen- und Entlüftungsleitung (19, 4) beide aus Kunststoff hergestellt sind.

3. Anordnung nach Anspruch 1 oder 2, wobei das Einlassende der Einfüllstutzenleitung (19) mit einem Einlassstutzenzwischenstück (18) verbunden ist, das einen Innendurchmesser aufweist, der zum Zusammenwirken mit einer Düse der Kraftstoffabgabevorrichtung bemessen ist.

4. Anordnung nach Anspruch 3, wobei das Einlassstutzenzwischenstück (18) in einem äußeren Gehäuse (3) angeordnet ist, das am zweiten Ende der Entlüftungsleitung (4) befestigt ist, wobei das äußere Gehäuse (3) mit dem Einlassstutzenzwischenstück (18) zusammenwirkt, um eine oder mehrere Entlüftungsöffnungen zu definieren, durch die Dampf aus der Entlüftungsleitung strömen kann.

5. Kraftfahrzeug mit einer Kraftstoff-Einfüllstutzenanordnung nach einem der Ansprüche 1 bis 4.

## Revendications

1. Ensemble de remplissage de carburant pour un véhicule automobile, comprenant un conduit de remplissage de carburant (19) ayant une extrémité d'entrée dans laquelle du carburant peut être introduit depuis un appareil de distribution de carburant, et une extrémité de sortie à connecter à un réservoir (25) utilisé pour stocker du carburant et un conduit de ventilation (4) dans lequel est logé le conduit de remplissage de carburant (19), le conduit de ventilation (4) ayant une première extrémité à connecter à une région supérieure du réservoir de carburant (25) et une deuxième extrémité à travers laquelle, au moins pendant le remplissage du réservoir de carburant (25), de la vapeur peut s'échapper hors du réservoir de carburant (25),
**caractérisé en ce que** le diamètre extérieur du conduit de remplissage de carburant (19) est substantiellement constant le long de sa longueur et le conduit de ventilation (4) a une première portion de diamètre intérieur uniforme s'étendant depuis sa première extrémité et qui est seulement légèrement plus grande que le diamètre extérieur correspondant du conduit de remplissage de carburant (19) de sorte que seulement un petit espace soit défini entre eux et une deuxième portion de diamètre intérieur augmentant progressivement s'étendant depuis la première portion vers la deuxième extrémité, de sorte que, sur au moins une portion de sa longueur, le conduit de ventilation (4) ait un diamètre intérieur qui est considérablement plus grand que le diamètre extérieur correspondant du conduit de remplissage de carburant (19) et qu'un grand espace (20) définissant un volume d'expansion de vapeur soit formé entre eux.

2. Ensemble selon la revendication 1, dans lequel les conduits de remplissage et de ventilation (19, 4) sont tous deux fabriqués en plastique.

3. Ensemble selon la revendication 1 ou 2, dans lequel l'extrémité d'entrée du conduit de remplissage de carburant (19) est connectée à un adaptateur de remplissage de carburant (18) ayant un diamètre intérieur dimensionné de manière à coopérer avec une buse de l'appareil de distribution de carburant.

4. Ensemble selon la revendication 3, dans lequel l'adaptateur de remplissage de carburant (18) est ajusté dans un boîtier externe (3) attaché à la deuxième extrémité du conduit de ventilation (4), le boîtier externe (3) coopérant avec l'adaptateur de remplissage de carburant (18) de manière à définir un ou plusieurs évents à travers lesquels de la vapeur provenant du conduit de ventilation peut s'écouler.

5. Véhicule à moteur comprenant un ensemble de remplissage de carburant selon l'une quelconque des revendications 1 à 4.
